# EUROPEAN PATENT APPLICATION

(11) **EP 4 436 129 A1**
(43) Date of publication of application: **25.09.2024**
(21) Application number: 22895265.1
(22) Date of filing: 06.10.2022
(51) Int. Cl.: H04L 45/76, H04L 41/085, H04L 41/0895, H04L 41/122, H04W 48/18, H04W 60/00

(54) **COMMUNICATION DEVICE, COMMUNICATION METHOD, AND PROGRAM**

(30) Priority: 18.11.2021 JP 2021188072
(71) Applicant: CANON KABUSHIKI KAISHA, Tokyo 146-8501 (JP)
(72) Inventor: HORIO, Daisuke, Tokyo 146-8501 (JP)
(74) Representative: Canon Europe Limited
(86) International application number: PCT/JP2022/037408
(87) International publication number: WO 2023/089979

(57) **Abstract**

A communication apparatus for a network in which communication is performed using BAP (Backhaul Adaptation Protocol), performs: identifying, based on a first packet received, a slice type to be supported by another communication apparatus that transfers the first packet in the network; identifying another communication apparatus supporting the identified slice type, based on a slice type supported by another communication apparatus in the network; and transmitting a second packet generated based on the first packet and communicated using BAP, the second packet having a header set in accordance with a result of identification, to the identified other communication apparatus.

## Description

### TECHNICAL FIELD

The present invention relates to a communication apparatus, a communication method, and a program.

### BACKGROUND ART

In the 3GPP (3rd Generation Partnership Project), IAB (Integrated Access and Backhaul) technology as a backhaul communication technology has been standardized. The IAB technology is for using millimeter wave radio communication in the 28 GHz band or the like used for access communication between base stations and user equipments (UEs) as backhaul communication (PTL1).

In a backhaul communication network (hereinafter, IAB network) that uses the IAB technology, relay devices called IAB nodes relay communication from an IAB donor, which corresponds to a conventional base station, to a destination UE. In the IAB network, in case radio communication conditions between the IAB donors and the IAB nodes deteriorate, restoring and improving the communication conditions by switching communication paths and forming multiple communication paths (hereinafter, multiple paths) is been studied. Further, in the IAB network, BAP (Backhaul Adaptation Protocol) is used in communication between the IAB donor and the IAB nodes and between the IAB nodes. BAP is defined as a protocol mainly for routing communication packets between a plurality of IAB nodes.

### CITATION LIST

### PATENT LITERATURE

PTL1: Japanese Patent Laid-Open No. 2019-534625

### SUMMARY OF INVENTION

### TECHNICAL PROBLEM

Here, introduction of a concept of network slicing, namely virtually providing network slices (hereinafter, slices) that satisfy requirements of different services to a common the network in the next-generation public networks has been studied. The types of slices defined include high speed/large capacity (eMBB), low latency (URLLC), and simultaneous multiple access (mMTC). eMBB is an abbreviation of enhanced Mobile Broadband. URLLC is an abbreviation of Ultra-Reliable and Low Latency Communication, and mMTC is an abbreviation of massive Machine Type Communication. For example, a mechanism is being studied in which a UE requests a predetermined network slice, and a CN (Core Network) responds over a base station to perform communication using the requested network.

However, in the IAB network, a packet may be routed by a communication apparatus that does not support a slice request of a relayed packet, and it may not be possible to perform communication satisfying the slice request.

The present invention has been made in view of the foregoing issue and aims to provide a technology for performing communication through a route that supports the slice request in a network in which communication is performed using BAP.

### SOLUTION TO PROBLEM

In response to the above issue, a communication apparatus according to the present invention is characterized in a communication apparatus for a network in which communication is performed using BAP (Backhaul Adaptation Protocol), the apparatus characterized by comprising: first identifying means for identifying, based on a first packet received, a slice type to be supported by another communication apparatus that transfers the first packet in the network; second identifying means for identifying another communication apparatus supporting the slice type identified by the first identifying means, based on a slice type supported by another communication apparatus in the network; and transmitting means for transmitting a second packet generated based on the first packet and communicated using BAP, the second packet having a header set in accordance with a result of identification by the second identifying means, to the other communication apparatus identified by the second identifying means.

### ADVANTAGEOUS EFFECTS OF INVENTION

According to the present invention, it is possible to provide a technology for performing communication through a route that supports the slice request in a network in which communication is performed using BAP.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 shows an example of an IAB network.
FIG. 2 is a hardware functional block diagram of a communication apparatus.
FIG. 3 is a software functional block diagram of the communication apparatus.
FIG. 4 shows an example of pass IDs in the IAB network 100.
FIG. 5 is a flowchart showing a communication method of the communication apparatus.
FIG. 6 shows an example of a routing list of an IAB donor 101.
FIG. 7 is a sequence diagram showing a routing operation in accordance with the slice type.
FIG. 8 shows an example of a routing list of an IAB node 105.
FIG. 9 is a flowchart showing a communication method of the communication apparatus.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <Embodiment 1>

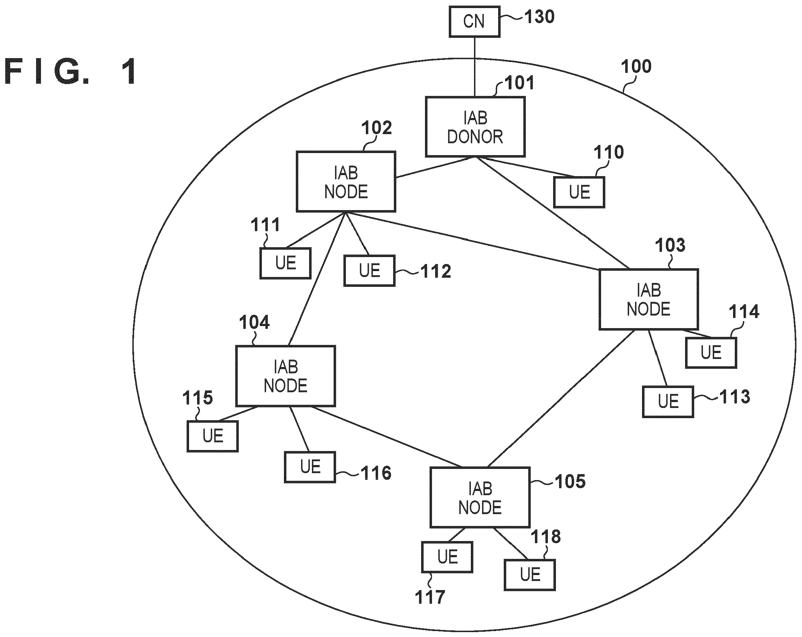

FIG. 1 shows an example of an IAB network according to the present invention. An IAB network 100 shown in FIG. 1 includes an IAB donor 101 and IAB nodes 102 to 105 (hereinafter also referred to as IAB nodes without distinction). The IAB donor 101 provides a connection to a CN 130. In the IAB network 100, NR (New Radio) communication is used in both backhaul links and access links in the network. The IAB donor 101 forms an IAB network (NR backhaul network) including the IAB nodes. Here, "CN" is an abbreviation of a core network and is responsible for various types of processing, such as authentication of UEs 110 to 118 (hereinafter also referred to as UEs without distinction), which are user equipments, and registration of use of network slices (slices).

The IAB donor 101 is an example of base station equipment that controls the IAB nodes and forms its own coverage area. It is assumed that the IAB donor 101 assigns, to each IAB node, the type of network slice that can be supported by this IAB node. It is also assumed that the IAB donor 101 manages information regarding the slice supported by each IAB node in the form of a NSSAI list. Here, "NSSAI" is an abbreviation of Network Slice Selection Assistance Information.

The IAB donor 101 and the IAB nodes each function as a communication apparatus as described below, and each communication apparatus in the following description is either the IAB donor 101 or any of the IAB nodes.

In the IAB network 100, when each UE receives service provided from the CN 130, a packet from the CN 130 is downlinked to the UE via the IAB donor 101. Meanwhile, in uplink communication, a packet from each UE is transmitted to the CN 130 similarly via the IAB donor 101.

Here, packets conforming to the format of BAP data PDU (Protocol Data Unit) (hereinafter also referred to as BAP data packets) are transmitted in the IAB network 100. For example, an IP (Internet Protocol) packet from the CN 130 that is addressed to the UE 118 is converted into a BAP data packet at the IAB donor 101 and transferred into the IAB network 100. The transferred BAP data packet is relayed by the IAB nodes 102 to 105, converted again into an IP packet at the IAB node 105, and delivered to the destination UE 118. Similarly, an IP packet from the UE 118 is also converted into a BAP data packet by the IAB node 105, converted again into an IP packet at the IAB donor 101 via the IAB network 100, and transferred to the CN 130.

In the IAB network 100, when the IAB donor 101 transfers a packet addressed to the UE 118, a communication route passing through either the IAB node 102 or 103 needs to be selected. Similarly, multiple paths are also formed from the IAB node 102 to the IAB node 105, and a route for transferring the BAP data packet needs to be selected.

Here, the IAB nodes may differ in the type of network slice (slice type) satisfying requirements of communication, i.e. the slice type to support. For example, the IAB node 102 may support eMBB and URLLC as slice types of IP packets, while the IAB node 104 may support only mMTC. In such a case, when a BAP data packet based on an IP packet whose slice type is eMBB is transferred to the UE 118 through a path P1, the IAB node 104 does not support the eMBB, and the request of the slice type (slice request) cannot be met.

In the routing of a BAP data packet at the IAB donor 101 and the IAB nodes, when a packet addressed to the UE 118 requests a specific slice type, the packet needs to be routed through IAB nodes that satisfy the slice request. The following description is given of a method of transferring a packet requesting a specific slice through a route constituted by communication apparatuses that support the slice request in a network having multiple paths, such as the IAB network 100. In this embodiment, a description is given of downlink communication in which a packet from the CN 130 is transferred to any of the IAB nodes 102 to 105 via the IAB donor 101.

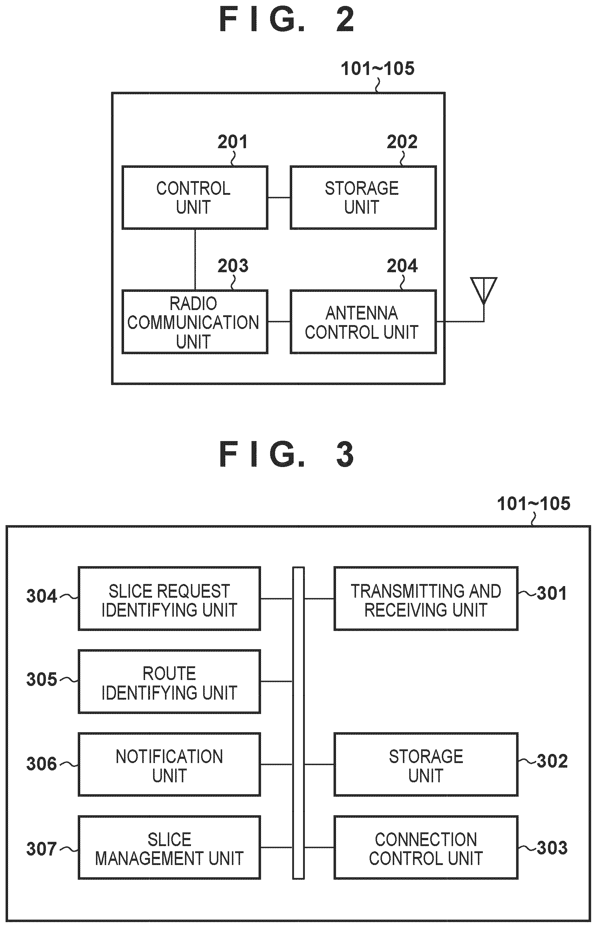

FIG. 2 is a hardware block diagram of the communication apparatus according to the present embodiment. The communication apparatus includes a control unit 201, a storage unit 202, a radio communication unit 203, and an antenna control unit 204.

The control unit 201 controls the entire communication apparatus by executing a control program stored in the storage unit 202. In one example, the control unit 201 includes a processor that loads the control program in a memory and executes the loaded program.

The control program to be executed by the control unit 201 is stored in the storage unit 202. Information used in the IAB network, such as a BAP address of the communication apparatus, supported NSSAI, connected UE information, and routing information regarding the IAB nodes 102 to 105, is also stored in the storage unit 202. Here, the BAP address is an address by which any of the IAB donor 101 and the IAB nodes 102 to 105 in the IAB network can be identified, and is used in a destination field of a header portion of the BAP data packet.

As will be described later, information by which a communication route of a BAP data packet that has been previously communicated in the IAB network 100 can be identified is stored in the storage unit 202. For example, information by which a communication route can be identified may be stored in association with a transmission source BAP address and a destination BAP address for a BAP data packet that has been previously communicated.

The radio communication unit 203 is for performing cellular network communication such as LTE (Long Term Evolution) or 5G (fifth-generation mobile communication system) conforming to the 3GPP standard. The antenna control unit 204 controls an antenna used for radio communication performed by the radio communication unit 203.

Note that the number of control units 201, the number of storage units 202, the number of radio communication units 203, and the number of antenna control units 204 may be more than one. The communication apparatus may also include constituent units that are normally provided in base station apparatuses, such as a wired communication unit.

FIG. 3 is a software block diagram of the communication apparatus according to the present embodiment. The software blocks of the communication apparatus are realized by the control unit 201 of the communication apparatus executing a program stored in the storage unit 202. The software blocks of the communication apparatus include a transmitting and receiving unit 301, a storage unit 302, a connection control unit 303, a slice request identifying unit 304, a route identifying unit 305, a notification unit 306, and a slice management unit 307.

The transmitting and receiving unit 301 controls the radio communication unit 203 via the control unit 201, executes cellular network communication such as LTE or 5G conforming to the 3GPP standard between the communication apparatus and the UEs, and transmits and receives IP packets. The transmitting and receiving unit 301 transmits and receives BAP data packets in the IAB network 100. The connection control unit 303 controls the antenna control unit 204 via the control unit 201 during radio communication.

The storage unit 302 controls and manages the storage unit 202. Programs to be executed by the control unit 201, such as an operating system of the communication apparatus, are stored in the storage unit 302. The network topology of the IAB network 100, communication routes, the BAP address of the communication apparatus, information regarding the UEs, and the like are also stored in the storage unit 302.

The slice management unit 307 stores and manages NSSAI information supported by each IAB node. Note that the NSSAI information is, for example, collected by BAP data packets or packets following various control PDUs of BAP (hereinafter referred to as BAP control packets), but may alternatively be collected by any other means.

The slice request identifying unit 304 identifies a slice requested by a packet received by the communication apparatus. For example, if the IAB donor 101 receives an IP packet from the CN 130, the slice request is identified based on the IP packet. If an IAB node receives a BAP data packet from a UE or any other communication apparatus, the slice request may be identified based on the received BAP data packet.

The route identifying unit 305 identifies a communication route (path) constituted by communication apparatuses that support the slice type of the received packet, which are at least any of the IAB donor 101 and the IAB nodes 102 to 105. Here, the communication apparatus has a correspondence list (hereinafter, a routing list) of identifiers (path IDs) of paths set in the IAB network 100 and supportable slice types, and this list is stored in the storage unit 302.

The route identifying unit 305 in one example identifies a communication route by selecting a path satisfying the slice requested by a communication packet based on the routing list. A method for selecting the path will be described later. The information by which the communication route identified by the route identifying unit 305 can be identified is set as a route parameter in the path field of the BAP data packet.

If a path satisfying the slice request cannot be identified, the notification unit 306 notifies the destination, i.e. any of the UEs 110 to 118 or the CN 130 that the slice request cannot be satisfied, by using a BAP data message or a BAP control message. As a notification method, the PDU type field of the BAP control message may indicate that the slice request is not achieved, for example.

Here, the route parameter is communication route information including the BAP addresses and the path IDs of the IAB donor 101 and the IAB nodes 102 to 105. The path ID is information that identifies a route constituted by a combination of a series of relay IAB nodes from the IAB donor 101 to the destination IAB node of the BAP data packet.

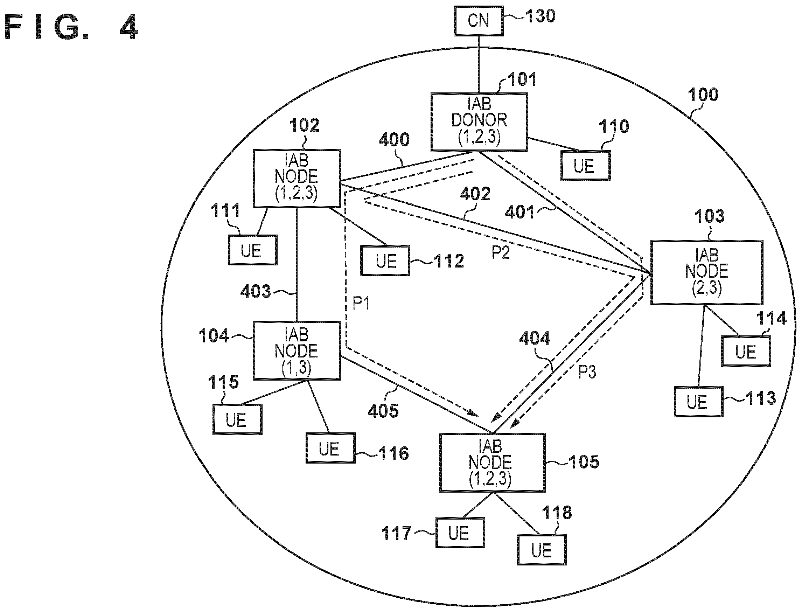

FIG. 4 is a diagram illustrating paths in the IAB network 100 according to the embodiment 1. Here, the path ID included in the route parameter set in a BAP data packet is described by taking the IAB network 100 as an example. Note that in the example of FIG. 4, the slice type supported by the communication apparatus is shown in parentheses, where 1 denotes the slice type eMBB, 2 denotes URLLC, and 3 denotes mMTC. For example, the IAB donor 101, the IAB node 102, and the IAB node 105 support the slice types 1, 2, and 3. The IAB node 103 supports the slice types 2 and 3, and the IAB node 104 supports the slice types 1 and 3.

In the IAB network 100, routes from the IAB donor 101 to the IAB nodes 102 to 105 can be represented by paths with identifiers P1 to P3. P1 is a path ID of a path connecting the IAB donor 101 to the IAB node 105 via radio sections (sections) 400, 403, and 405. P2 is a path ID of a path connecting the IAB donor 101 to the IAB node 105 via sections 400, 402, and 404. P3 is a path ID of a path connecting the IAB donor 101 to the IAB node 105 via sections 401 and 404. Although only three paths are set in the description of the present embodiment, other paths such as paths connecting to the IAB node 105 via the sections 401, 402, 403 and 405 may be additionally or alternatively set, for example.

In the IAB network 100 according to the present embodiment, the communication apparatus identifies a slice request based on an IP packet, identifies a route based on the identified slice request, and generates a BAP data packet in which a route parameter is set by which the identified route can be identified. Thus, a communication route in the IAB network 100 can be designated when converting the IP packet into the BAP data packet. The IAB nodes 102 to 105 that relay the BAP data packet can identify the route for transferring the packet based on the route parameter included in the BAP data packet.

### (Processing example 1)

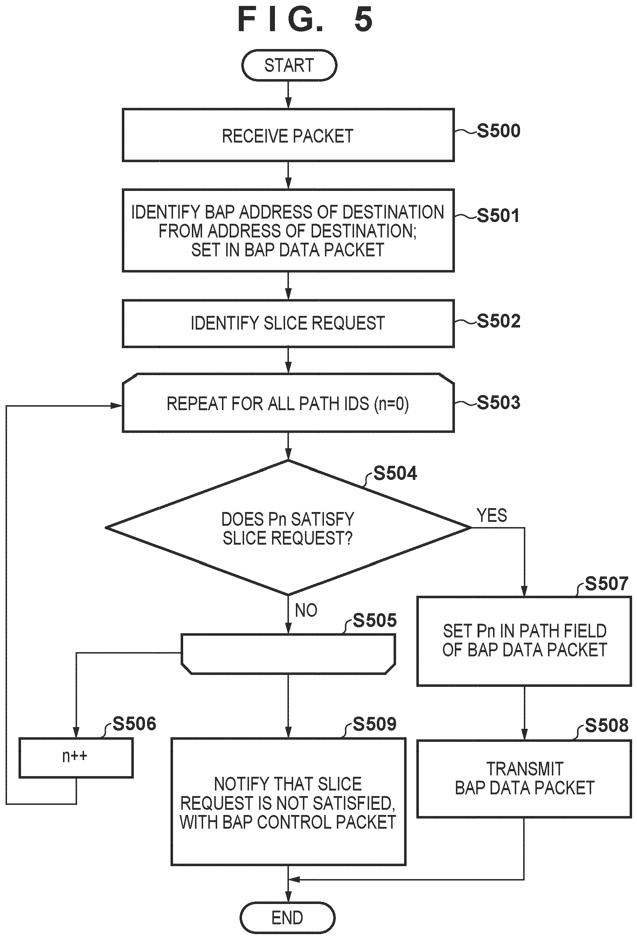

FIG. 5 is a flowchart showing a method by which the communication apparatus according to the processing example 1 generates an IP packet into a BAP data packet and transmits the generated packet. In the following description, the IAB donor 101 receives an IP packet from the CN 130, generates a BAP data packet, and transmits the generated BAP data packet to an IAB node.

In step S500, the IAB donor 101 receives an IP packet from the CN 130. In step S501, the IAB donor 101 identifies a BAP address of any of the IAB nodes 102 to 105 to which a BAP data packet is to be transferred based on the IP address of a destination of the received IP packet (IP address of a UE), and sets the identified BAP address in the destination field of the BAP data packet. If, for example, the destination is the UE 118, the BAP address of the IAB node 105 is set in the destination field of the BAP data packet.

In step S502, a requested slice type is identified by analyzing the destination IP address or the application header of the received IP packet. If, for example, a use range of the IP address is determined as a subnet for each slice in the IAB network 100, the requested slice type can be identified only with the destination IP address. For example, an IP address may be assigned from a given range for each of the slice types of the UEs; for example, "192.168.1.*" is assigned to a UE requesting the slice type eMBB, "192.168.2.*" to URLLC, and "192.168.3.*" to mMTC. Here, * denotes an integer of 0 to 255. In this case, the IAB donor 101 can identify the slice request based on the address range of the destination IP address.

Alternatively, if the IAB donor 101 has a network interface (NIC) or a virtual NIC for each slice type, the IAB donor 101 may identify the slice request based on the NIC or virtual NIC that received the IP packet.

The processing in steps S503 to S505 is repeatedly performed for each path. Here, the path ID is used as a route parameter that identifies a route to the destination IAB node in combination with the destination BAP address determined in step S501.

In step S504, it is determined whether or not a path with a path ID Pn (n is an integer of 1 to the number of paths) satisfies the slice request. Here, it is determined, with reference to the routing list, whether or not the path satisfies the slice request only for the IAB node 105 to which the destination UE 118 is connected. If, in step S504, Pn satisfies the slice, processing in step S507 is performed. If not, determination is performed for the next pass ID in step S506. If there is no path satisfying the slice request among all of the pass IDs, repetitive processing in S503 to S505 is exited and processing S509 is performed.

In step S507, Pn is set as a path ID satisfying the slice request in the path ID field of the BAP data packet in accordance with the result of identifying the route. In step S508, the generated BAP data packet is transmitted, and the processing in FIG. 5 ends.

In step S509, the IAB donor 101 generates a BAP control packet for giving a notification that the slice request is not met, transmits the generated BAP control packet to any of the IAB nodes 102 to 105 to which the destination UE connect, which is any of the UEs 110 to 118, and ends the processing in FIG. 5. In one example, the IAB donor 101 may notify the CN 130, which is the transmission source, that the requested slice is not satisfied by using an IP packet or the like.

It is assumed in the present embodiment that communication is performed between the CN 130 and the UEs 110 to 118 by using IP packets. However, a route can also be similarly identified for other destinations. Although processing performed when transferring an IP packet as a BAP data packet has been described in the present embodiment, the same procedure can be used for communication packets of other protocols.

As described above, the route identifying unit 305 can transfer a packet such that a slice request is met by selecting a path satisfying the slice request to the IAB node to which the destination UE is connected and setting the selected path in the path field of the header of the BAP data packet.

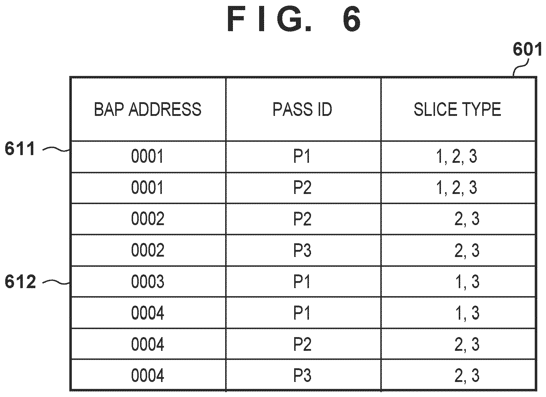

FIG. 6 shows an example of a routing list of the IAB donor 101 according to the present embodiment.

In the description with reference to FIG. 6, the IAB nodes 102 and 105 support eMBB, URLLC, and mMTC, the IAB node 103 supports URLLC and mMTC, and the IAB node 104 supports eMBB and URLLC in the network configuration in FIG. 4.

A routing list 601 is managed by the IAB donor 101 and includes BAP addresses, path IDs, and supported slice types. In the routing list 601, BAP addresses as addresses of the other communication apparatuses, path IDs as information regarding routes configured by the communication apparatuses in the network, and slice types supported by the respective communication apparatuses are associated with each other. Each slice type corresponds to SST (Slice Service Type). In FIG. 6, eMBB is represented as SST = "1", URLLC is represented as SST = "2", and mMTC is represented as SST = "3". The BAP addresses are "0001" for the IAB node 102, "0002" for the IAB node 103, "0003" for the IAB node 104, and "0004" for the IAB node 105. The path IDs are P1 to P3, which has been described with reference to FIG. 4.

In the routing list 601, the IAB node 103 does not support the eMBB (SST= 1), so that eMBB (SST= 1) is not supported in the routes P2 and P3 that pass through the IAB node 103 with the BAP address "0002". Also, the IAB node 104 does not support the URLLC, so that the URLLC (SST= 2) is not supported in the route P1 that passes through the IAB node 104 with the BAP address "0003".

Here, an operation of identifying a route is described by taking an example in which the IAB donor 101 transfers a packet requesting eMBB as a slice request to the UE 118.

In step S501, the IAB donor 101 identifies a destination BAP address based on the destination of the IP packet. The UE 118 is connected to the IAB node 105, and the IAB donor 101 thus identifies the destination BAP address of the BAP data packet as "0004" and sets "0004" as the destination address of the BAP data packet.

In the routing list 601, the path IDs for the BAP address "0004" are P1, P2, and P3, and the path ID of a path supporting the eMBB is P1 in steps S503 to S505. Thus, the IAB donor 101 sets the path field of the BAP data packet so as to transfer the BAP data packet using the path P1. With this, the IAB nodes 102, 104, and 105 that receive the BAP data packet reference the path field and relay the packet, and the communication apparatuses satisfying the slice request can thus relay the BAP data packet.

When the IAB donor 101 transfers a communication packet that requests URLLC and is addressed to the UE 117, it is identified that the BAP address is "0004" and the path ID with which the packet is transferred by communication apparatuses supporting URLLC is P2.

### (Method of creating routing list)

Processing for creating the routing list is described with reference to FIG. 6.

Here, a description is given of processing for creating the routing list shown in FIG. 6 for the path IDs P1, P2, and P3 in the network configuration shown in FIG. 4. Although the IAB donor 101 creates the routing list in the description of the present embodiment, any other node, such as the CN 130, may create the routing list and transmit the created routing list to the IAB donor 101. Alternatively, any of the IAB nodes may create the routing list in the same method. That is, the communication apparatus may create the routing list based on paths and slice types supported by the other communication apparatuses, or the communication apparatus may receive the routing list from another communication apparatus or the CN 130.

Here, the IAB donor 101 has identifiers of the IAB nodes through which the paths with the path ID P1, P2, and P3 pass, and information regarding the slice type supported by each IAB node. For example, the IAB donor 101 has information by which it can be identified that the path with the path ID P1 passes through the IAB nodes 102, 104, and 105. Note that each path ID may be associated with a path used in downlink communication or a path used in uplink communication. The IAB donor 101 has information by which it can be identified that the IAB node 102 supports the slice types 1, 2, and 3, the IAB node 104 supports the slice types 1, 3, and the IAB node 105 supports the slice types 1, 2, and 3.

In this case, the IAB node 102, through which the path of the path ID P1 passes first, supports the slice types 1, 2, and 3. Based on this, the IAB donor 101 registers, for the path ID P1, data 611 indicating that the slice types 1, 2, and 3 are supported at the BAP address 0001 (IAB node 102).

Next, regarding the path ID P1, the slice types 1 and 3 are supported at the BAP address 0003 (IAB node 104). Further, the slice types 1, 2 and 3 are supported in the path P1 up to the IAB node 102 connected to the IAB node 104. The IAB donor 101 thus determines that common slice types among the slice types supported in the path to the BAP address 0003 and the slice types 1 and 3 supported at the BAP address 0003 are supported in the path P1 up to the BAP address 0003. The IAB donor 101 registers, for the path ID P1, data 612 indicating that the slice types 1 and 3 are supported at the BAP address 0003 (IAB node 104).

Next, regarding the path ID P1, the slice types 1, 2 and 3 are supported at the BAP address 0004 (IAB node 105). Further, the slice types 1 and 3 are supported in the path P1 up to the IAB node 104 connected to the IAB node 105. Thus, the IAB donor 101 determines that common slice types among the slice types supported in the path up to the BAP address 0004 and the slice types 1, 2, and 3 supported at the BAP address 0004 are supported in the path P1 up to the BAP address 0004. The IAB donor 101 registers, for the path ID P1, data 613 indicating that the slice types 1 and 3 are supported at the BAP address 0004 (IAB node 105).

By similarly performing determination for the other path IDs, supported slice types can be determined in association with each path ID with nodes located on the path.

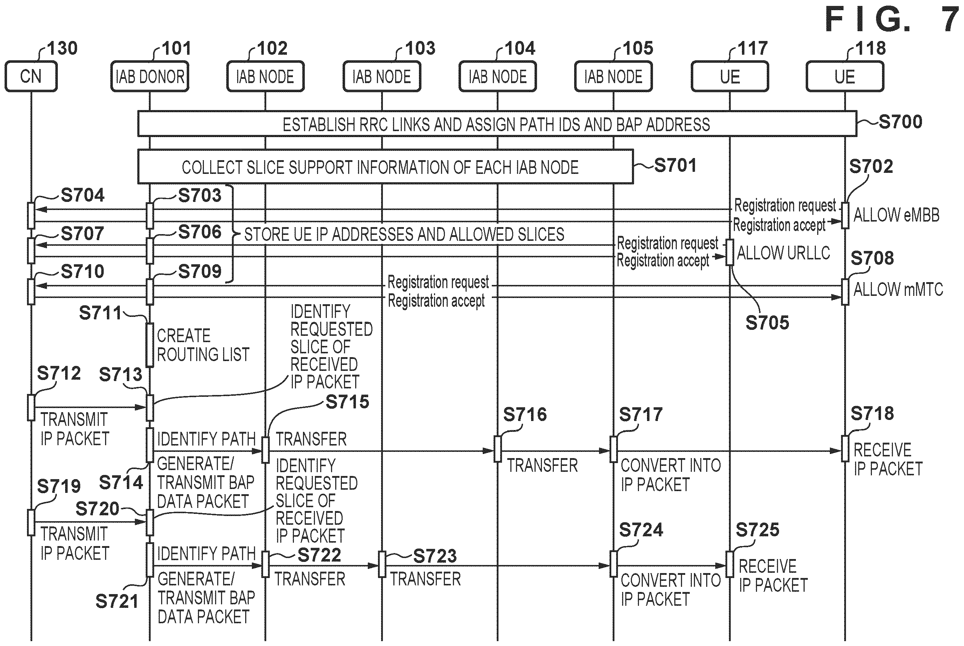

FIG. 7 is a sequence diagram showing processing for identifying a route corresponding to the slice type according to the present embodiment.

In step S700, RRC (Radio Resource Control) links are established and path IDs are assigned by the IAB donor 101 in the IAB network 100. The RRC has functions such as connection establishment between the IAB nodes 102 to 105 and the UEs 110 to 119, admission control, RRC status management, and notification of peripheral cell information and access regulation.

In step S701, the IAB donor 101 collects NSSAI, which is slice support information regarding the IAB nodes 102 to 105. In step S702, the UE 118 transmits Registration request to the CN 130 and makes a request to use an eMBB slice. In step S704, the CN 130 transmits Registration accept to allow the UE 118 to use the slice.

In steps S705 and S706, the UE 117 similarly exchanges Registration request and Registration accept with the CN 130 in order to register the use of URLLC. Similarly, in steps S708 and S710, the UE 118 makes a request to use an mMTC slice to the CN130, and the CN 130 grants the request. Although not shown in FIG. 7, each UE makes a request for a network slice that the UE desires to use to the CN 130.

In steps S703, S706, and S709, the IAB donor 101 stores the IP addresses of the UE 117 and 118 and the slice types allowed to be used for the respective IP addresses. This is to identify a requested slice when IP packets to the UEs 117 and 118 are received from the CN 130. In the description of the present embodiment, the requested slice is identified based on the destination address of an IP packet when the IP packet is received from the CN 130. However, the requested slice may also be identified by any other method, as mentioned above.

In step S711, an IAB routing list is created based on the path IDs and the BAP addresses assigned by the IAB donor 101 in step S700 and the slice support information regarding each IAB node collected in step S701.

In step S712, the CN 130 transmits an IP packet requesting eMBB that is addressed to the UE 118. In step S713, the IAB donor 101 identifies a requested slice of the received IP packet based on the destination IP address.

In step S714, the BAP address of the IAB node 105 is identified based on the IP address of the UE 118, and P1 is identified as a path ID satisfying eMBB from the routing list. The IAB donor 101 also generates a BAP data packet based on the IP packet. Further, the IAB donor 101 sets the BAP address and the path ID in the header of the BAP data packet and transmits the BAP data packet to the IAB node 105. In steps S715 and S716, the IAB nodes 102 and 104 transfer the BAP data packet in accordance with P1 set as the path ID. In step S717, the IAB node 105, which is the destination BAP address, receives the BAP data packet, converts the received packet again into an IP packet to transfer this packet to the UE 118, and transmits the IP packet to the UE 118. In step S718, the UE 118 receives the IP packet transferred through the route satisfying the request for eMBB.

In step S719, the CN 130 transmits an IP packet requesting URLLC that is addressed to the UE 117. In step S720, the IAB donor 101 identifies a requested slice of the received IP packet.

In step S721, the BAP address of the IAB node 105 is identified based on the IP address of the UE 117, P2 is selected as a path ID satisfying the URLLC from the routing list, and a BAP data packet is generated and transmitted to the IAB node 105. In steps S722 and S723, the IAB nodes 102 and 103 transfer the BAP data packet in accordance with P2 set as the path ID. In step S724, the IAB node 105 receives the BAP data packet, converts the received packet into an IP packet, and transmits this IP packet to the UE 117. In step S725, the UE 117 receives the IP packet satisfying the request for URLLC.

As described above, when the IAB donor 101 receives an IP packet, the IAB donor 101 generates a BAP data packet with a route parameter satisfying a slice request set in the header, and transmits the generated packet. Thus, in the IAB network 100 with multiple paths, the BAP data packet can be relayed to a destination UE through a communication route constituted by communication apparatuses satisfying the slice requirement in the network.

### (Processing example 2)

The processing example 1 has been given regarding downlink transmission in which an IP packet from the CN 130 is transmitted from the IAB donor 101 to the destination UEs 117 and 118 via the IAB network 100. The processing example 2 is described regarding an uplink operation in which a packet requesting a specific slice from UE 118 is transmitted from the IAB node 105 to the CN 130 via the IAB network 100.

When the IAB node 105 receives an IP packet addressed to the CN 130 from the UE 118, the IAB node 105 converts the IP packet into a BAP data packet and transmits the BAP data packet as in the processing example 1. Here, the address of the IAB donor 101 is set as the BAP address. The path ID is selected by referencing the routing list.

The routing list in the IAB node 105 includes the path IDs in the IAB network 100, the BAP addresses of the IAB donor 101 and the IAB nodes 102 to 105, and supported NSSAI, as in the processing example 1. Note that the IAB nodes 102 to 105 according to the processing example 2 may create a routing list at each node or receive a routing list created by the IAB donor 101 or the CN 130.

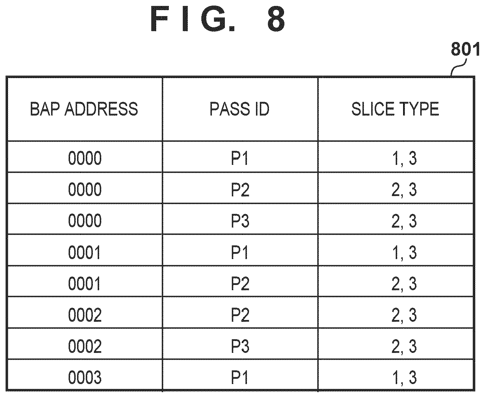

FIG. 8 shows an example of the routing list of the IAB node 105 according to the present embodiment.

In a routing list 801, a BAP address "0000" is the address of the IAB donor 101. Here, the IAB node 103 supports URLLC and mMTC, and the IAB node 104 supports eMBB and URLLC, as shown in FIG. 4. The IAB nodes 102 and 105 support eMBB, URLLC, and mMTC.

A description is given of processing for identifying, using the routing list 801, a route for transferring a BAP data packet in FIG. 5 by taking an example in which the IAB node 105 transfers a packet requesting eMBB from the UE 118.

In step S501, the IAB node 105 receives an IP packet whose slice type is eMBB from the UE 118. The CN 130 is connected to the IAB donor 101, and the destination BAP address of the BAP data packet is therefore "0000". Thus, in step S502, the IAB node 105 identifies the destination BAP address of the IP packet received from the UE 118 as "0000", and sets the destination BAP address "0000" in the BAP data packet.

In the routing list 801, the path IDs for the BAP address "0000" are P1, P2 and P3, and among them, P1 is the path ID of a path supporting eMBB (slice type 1). Thus, in step S507, the IAB node 105 sets P1 in the path field of the header of the BAP data packet, and in step S508, the IAB node 105 transmits the BAP data packet.

When the IAB node 105 transfers a packet requesting URLLC from a transmission source UE that is the UE 117, similarly, the BAP address is "0000", and P2 or P3 are the paths through which the packet is transferred by communication apparatuses supporting URLLC (slice type 2). Thus, the header of the BAP data packet is set and transmitted based on the path that has been determined earlier as a path supporting URLLC.

Note that in the example in FIG. 5, loop processing in steps S503 to S505 ends when a path satisfying the slice request is found. In one example, the communication apparatus may select a path meeting the slice request and proceed to processing in steps S507 and S508 after determining whether or not the slice request is met for every path. In this case, if the slice type is supported by a plurality of paths, the plurality of paths may be used in order.

As described above, even in the case of uplink communication in which a communication packet requesting a specific slice is transmitted from any of the UEs 110 to 118 to the CN 130, communication can be performed through a route satisfying the slice request in the IAB network 100.

### <Embodiment 2>

In the embodiment 1, a description has been given of the processing in which the communication apparatus receives an IP packet, identifies a communication route and a slice type to be supported by communication apparatuses that transfer a BAP data packet, sets the header of the BAP data packet, and transfer the BAP data packet.

In the embodiment 2, the communication apparatus transmits the slice type of a received IP packet to a first communication apparatus, which is another communication apparatus supporting the slice type, together with information by which the slice type can be identified. The first communication apparatus that has received the BAP data packet from the communication apparatus identifies the slice type, identifies a second communication apparatus, which is yet another communication apparatus supporting this slice type, and transfers the BAP data packet to the second communication apparatus.

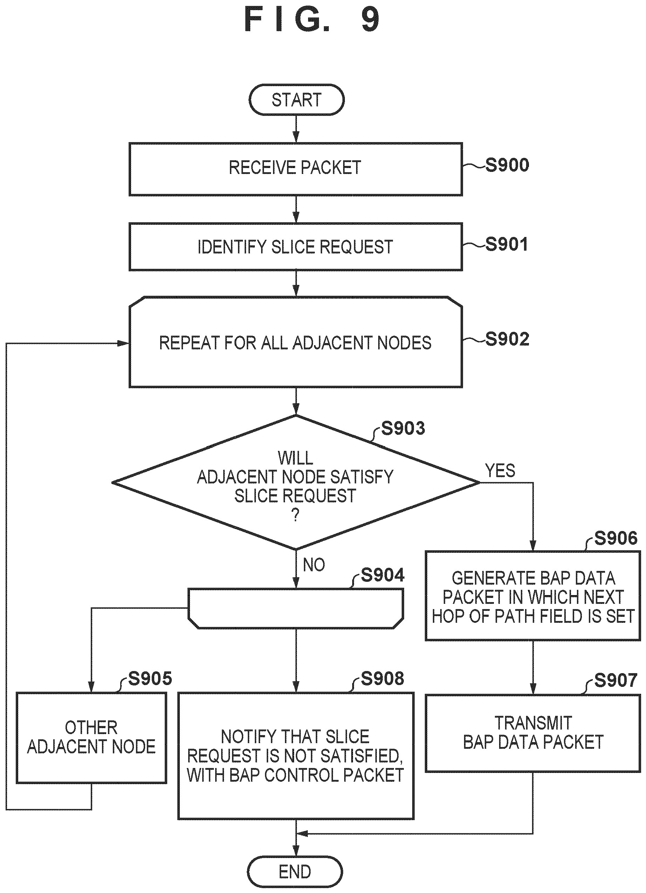

A communication method performed by the communication apparatus according to the present embodiment is described with reference to FIG. 9. Processing shown in FIG. 9 is performed by the control unit 201 of the communication apparatus.

In step S900, the communication apparatus receives a packet. For example, the IAB donor 101 receives an IP packet from the CN 130, or an IAB node receives an IP packet from a UE, or an IAB node receives a BAP packet from another IAB node.

In step S901, the communication apparatus identifies, based on the received packet, the slice type to be supported by communication apparatuses that transfer the BAP data packet. When the IAB donor 101 or an IAB node receives an IP packet, the slice type may be identified based on the destination IP address or the address range as mentioned above. When an IAB node receives a BAP packet from another IAB node, the slice type may be identified based on the header of the BAP data packet.

Next, in steps S902 to S904, the communication apparatus determines whether or not other communication apparatuses (adjacent nodes) that are directly connected support the slice type identified in step S901. For example, when the IAB node 102 receives a BAP data packet from the IAB donor 101 in the topology shown in FIG. 4, the slice types supported by the IAB node 103 and the IAB node 104 are determined. If it is determined that any of the adjacent nodes supports the slice request (Yes in S903), the communication apparatus advances the processing to step S906. In step S906, the communication apparatus generates a BAP data packet in which NEXT HOP is set in the path field, based on information regarding the adjacent node satisfying the slice request identified in steps S902 to S904. Next, the communication apparatus transmits the generated BAP data packet to the identified adjacent node (S907). If the communication apparatus receives a BAP data packet in step S900, only the path field of the BAP data packet may be updated. If the communication apparatus receives an IP packet in step S900, the communication apparatus generates a BAP data packet based on the IP packet and sets a value indicating the identified slice request in the packet header. In one example, the SST value is allocated to a reserved bit of the packet header.

Processing in steps S907 and S908 are the same as processing in steps S508 and S509 in FIG. 5, and the description thereof is omitted.

As described above, when the communication apparatus according to the present embodiment relays a BAP data packet, the communication apparatus identifies another communication apparatus supporting the slice type, and creates and transmits the BAP data packet. Thus, if each communication apparatus can identify the slice type supported by adjacent nodes, the IAB donor 101 can route the BAP data packet through a communication route satisfying the slice request without creating a routing list.

### Other Embodiments

In one example, the communication apparatus obtains information regarding communication history, such as paths and addresses of other communication apparatuses included in the headers of BAP data packets previously transmitted and received in the network, and identifies a transmission destination of the BAP data packet based on the obtained results. Thus, other communication apparatuses to which the BAP data packet is to be transmitted can be identified based on the packets previously transmitted and received by the communication apparatus.

For example, in the processing example 2 of the embodiment 1, the IAB nodes 102 to 105 determine a path ID by using the routing list. In another example, a path ID of a BAP data packet previously received from the IAB donor 101 and the IP address of a UE may be stored, and the same path or an uplink path corresponding to a downlink path may be set for transmission when converting an IP packet from the UE.

For example, in the embodiment 2, there are cases where a transfer destination is not found as a result of transferring a packet based on whether or not any adjacent node supports the slice type of a BAP data packet. In such a case, the communication apparatus that has received a notification that identification of another communication apparatus supporting the slice type has failed can transfer the BAP data packet to an adjacent node in the network that is different from the adjacent node to which the communication apparatus has previously transmitted the packet.

The present invention can also be realized by processing in which a program that realizes one or more functions of the above-described embodiments is supplied to a system or device via a network or a storage medium, and one or more processors in a computer of the system or device loads and executes the program. Further, the present invention can also be realized by a circuit (e. g. ASIC) that realizes one or more functions.

The present invention is not limited to the above embodiments and various changes and modifications can be made within the spirit and scope of the present invention. Therefore, to apprise the public of the scope of the present invention, the following claims are made.

The present application claims priority based on Japanese patent application No. 2021-188072 filed November 18, 2021, the entire contents of which are hereby incorporated herein by reference.

### REFERENCE SIGNS LIST

100: IAB network, 101: IAB donor, 102 to 105: IAB node, 110 to 118: UE, 201: Control unit, 202: Storage unit, 203: Radio communication unit, 204: Antenna control unit, 301: Transmitting and receiving unit, 302: Storage unit, 303: Connection control unit, 304: Slice request identifying unit, 305: Route identifying unit, 306: Notification unit; 307: Slice management unit

## Claims

1. A communication apparatus for a network in which communication is performed using BAP (Backhaul Adaptation Protocol), the apparatus **characterized by** comprising:
first identifying means for identifying, based on a first packet received, a slice type to be supported by another communication apparatus that transfers the first packet in the network;
second identifying means for identifying another communication apparatus supporting the slice type identified by the first identifying means, based on a slice type supported by another communication apparatus in the network; and
transmitting means for transmitting a second packet generated based on the first packet and communicated using BAP, the second packet having a header set in accordance with a result of identification by the second identifying means, to the other communication apparatus identified by the second identifying means.

2. The communication apparatus according to claim 1, **characterized in that**
the second identifying means identifies a communication route supporting the slice type as the other communication apparatus supporting the slice type, and
the header of the second packet includes an identifier of a communication route from the communication apparatus to another communication apparatus being a destination of the second packet.

3. The communication apparatus according to claim 2, **characterized by** further comprising:
storage means for storing a routing list in which an identifier of a communication route for transferring a packet in the network, an address of another communication apparatus in the network, and a slice type supported by the other communication apparatus are associated with each other,
wherein the second identifying means identifies, based on the routing list, another communication apparatus included in a communication route supporting the slice type identified by the first identifying means.

4. The communication apparatus according to claim 3, **characterized by** further comprising:
creating means for creating the routing list.

5. The communication apparatus according to any one of claims 2 to 4, **characterized in that**
the identifier of the communication route is set in a path field of the second packet.

6. The communication apparatus according to claim 1, **characterized in that**
the second identifying means identifies another communication apparatus supporting the slice type and directly connected to the communication apparatus, and
the header of the second packet includes a BAP address of the other communication apparatus as NEXT HOP.

7. The communication apparatus according to any one of claims 1 to 6, **characterized in that**
the communication apparatus is an IAB (Integrated Access Backhaul) node that uses NR (New Radio) communication for both a backhaul link and an access link in the network, or an IAB donor that controls the IAB node.

8. The communication apparatus according to any one of claims 1 to 7, **characterized in that**
the first identifying means identifies the slice type based on a destination address of the first packet or an application header of the first packet.

9. The communication apparatus according to any one of claims 1 to 8, **characterized by** further comprising:
notification means for giving a notification that identification has failed in a case where the second identifying means is unable to identify another communication apparatus supporting the slice type identified by the first identifying means.

10. The communication apparatus according to any one of claims 1 to 9, **characterized by** further comprising:
second obtaining means for obtaining information related to the header of the second packet previously transmitted or received in the network,
wherein the second identifying means identifies another communication apparatus supporting the slice type identified by the first identifying means, based on a result of obtainment by the second obtaining means.

11. The communication apparatus according to any one of claims 1 to 10, **characterized in that**
the first packet is an IP (Internet Protocol) packet, and the communication apparatus receives the first packet from a CN (Core Network) node or a user equipment (UE).

12. The communication apparatus according to any one of claims 1 to 10, **characterized in that**
the first packet is a BAP data packet, and the communication apparatus receives the first packet from an IAB donor or an IAB node.

13. A communication method for a communication apparatus in a network in which communication is performed using BAP (Backhaul Adaptation Protocol), the method **characterized by** comprising:
identifying, based on a first packet received, a slice type to be supported by another communication apparatus that transfers the first packet in the network;
identifying another communication apparatus supporting the slice type identified, based on a slice type supported by another communication apparatus in the network; and
transmitting a second packet generated based on the first packet and communicated using BAP, the second packet having a header set in accordance with an identification result, to the other communication apparatus identified.

14. A program to be executed by a communication apparatus for a network in which communication is performed using BAP (Backhaul Adaptation Protocol), the program causing the apparatus to execute:
a first identifying step of identifying, based on a first packet received, a slice type to be supported by another communication apparatus that transfers the first packet in the network;
a second identifying step of identifying another communication apparatus supporting the slice type identified in the first identifying step, based on a slice type supported by another communication apparatus in the network; and
a transmitting step of transmitting a second packet generated based on the first packet and communicated using BAP, the second packet having a header set in accordance with a result of identification in the second identifying step, to the other communication apparatus identified in the second identifying step.
